# EUROPEAN PATENT APPLICATION

(11) **EP 2 886 867 A2**
(43) Date of publication of application: **24.06.2015**
(21) Application number: 14193874.6
(22) Date of filing: 19.11.2014
(51) Int. Cl.: F04B 49/06

(54) **Hydraulic fluid pressure control**

(30) Priority: 19.11.2013 GB 201320403
(71) Applicant: GE Oil & Gas UK Limited, Nailsea Bristol BS48 1BS (GB)
(72) Inventor: Roberts, Tim James, Bristol, BS48 1BS (GB)
(74) Representative: Illingworth-Law, William Illingworth

(57) **Abstract**

A hydraulic fluid pressure control system comprises: a hydraulic pump motor (2) having an electrical input configured to receive an AC input signal and a hydraulic fluid output configured to output a pressure proportional to the frequency of the AC input signal, and an electronic control circuitry (8) connected to said electrical input; wherein said electronic control circuitry (8) provides an AC input signal of variable frequency.

## Description

### FIELD OF THE INVENTION

This invention relates to a hydraulic fluid pressure control system and method for controlling the speed of a hydraulic pump motor, for example a hydraulic pump motor which acts as a hydraulic power source for well control in an underwater hydrocarbon extraction facility.

### BACKGROUND OF THE INVENTION

The control functions of a subsea well are effected by directional control valves (DCVs) that switch hydraulic pressure to sub-sea tree valves. The hydraulic pressure is provided by a pump which is typically governed by crude low and high level pressure switches, switching the motor on or off according to two set thresholds. The high and low pressure trigger points must be set sufficiently far apart to allow a reasonable period of pressure decay before the pump motor is re-energised because the pump motor can only tolerate a finite number of starts under load to maximum speed, before the winding of the motor is degraded and a failure occurs.

The DCVs have an inbuilt self-closing feature (de-latch) set at an appropriate pressure for the field as a failsafe, such that if the hydraulic pressure source fails, the DCV self closes, typically shutting down the well. On a typical field of wells, operating at 207 bar (20.7 MPa) pressure, this de-latch falls so close to the lowest hydraulic pressure from the hydraulic source pump that insufficient pressure remains to allow the requirement for a percentage safety margin. The required de-latch margin is calculated from the lower set point. Currently, the only method used to flatten out the pressure variation, is by the use of mechanical pressure regulators. These have a very poor reputation for reliability. With current systems there is a danger that, at a period of low pressure, a DCV may experience an unwanted de-latch and close a valve on the wellhead tree out of sequence, causing damage to the well or its unwanted shut down.

The present invention aims to overcome some of these difficulties.

### SUMMARY OF THE INVENTION

In accordance with a first aspect of the present invention, there is provided a hydraulic fluid pressure control system comprising:
a hydraulic pump motor having an electrical input configured to receive an AC input signal and a hydraulic fluid output configured to output a pressure proportional to the frequency of the AC input signal; and
electronic control circuitry connected to said electrical input, wherein:
   said electronic control circuitry provides an AC input signal of variable frequency.

The hydraulic fluid pressure control system could further comprise a pressure sensor connected to the hydraulic fluid output. The pressure sensor could produces an electrical output responsive to the sensed pressure of the hydraulic fluid output. The electronic control circuitry could provide an AC input signal based on the electrical output.

The electronic control circuitry could comprise an electronic inverter.

The electronic control circuitry could provide an AC input signal corresponding to a target pressure of the hydraulic fluid output.

The electronic control circuitry could limit the rate of change of the AC input signal frequency.

Typically, the pump motor acts as a power source for a directional control valve.

The hydraulic pump motor could act as a hydraulic power source for well control in an underwater hydrocarbon extraction facility.

In accordance with a second aspect of the present invention, there is provided a method for controlling the speed of a hydraulic pump motor, said hydraulic pump motor having an electrical input configured to receive an AC input signal and a hydraulic fluid output configured to output a pressure proportional to the frequency of the AC input signal, said method comprising:
providing an AC input signal of variable frequency to the electrical input using electronic control circuitry.

The method could further comprise the step of providing a pressure sensor connected to the hydraulic fluid output. The method could further comprise the steps of sensing the pressure of the hydraulic fluid output using the pressure sensor, and producing an electrical output responsive to the sensed pressure of the hydraulic fluid output.

The electronic control circuitry could provide an AC input signal based on the electrical output.

The electronic control circuitry could comprise an electronic inverter.

The electronic control circuitry could provide an AC input signal corresponding to a target pressure of the hydraulic fluid output.

The electronic control circuitry could limit the rate of change of the AC input signal frequency.

Typically, the pump motor acts as a power source for a directional control valve.

The hydraulic pump motor could act as a hydraulic power source for well control in an underwater hydrocarbon extraction facility.

### BRIEF DESCRIPTION OF THE FIGURES

Fig. 1 schematically shows a prior art hydraulic pressure control system; and
Fig. 2 schematically shows a hydraulic pressure control system in accordance with an embodiment of the present invention.

### Detailed Description of the Invention

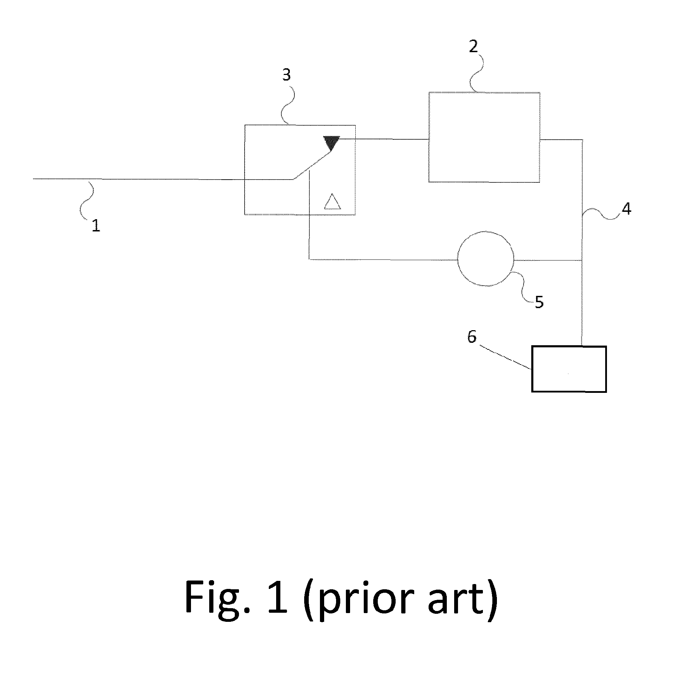

Fig. 1 illustrates a prior art hydraulic fluid pressure control system. A fixed frequency, typically 50 or 60 Hz, power supply 1 feeds a hydraulic pump motor 2, via a simple switch 3. The pressure of the hydraulic output 4, is sensed by a pressure switch 5, which has a settable high pressure operating point and a settable low pressure point and thus settable hysteresis. Pressure switch 5 operates and latches when the pressure has reached the high setting and thus operates the AC power switch 3, turning off the pump 2. When the pressure falls to the low setting the pressure switch 5 de-latches and the AC power switch 3 switches the pump back on. The hydraulic output 4 acts as a hydraulic power source for directional control valve (DCV) 6, which performs well control functions in an underwater hydrocarbon extraction facility.

The following embodiment replaces the on / off pressure switch controls with a variable speed pump motor drive, thus providing a virtually constant pressure output and eliminating the need for mechanical pressure regulators, and maintaining an acceptable pressure margin above the de-latch pressures of the control DCVs. The substantially improved hydraulic pressure control also allows the well equipment supplier to engineer a DCV standard that satisfies field requirements. Variable speed motor drives are a common product, originally used in building ventilation to control large air fan speeds, and employ an electronic inverter to provide a variable frequency AC to a synchronous motor.

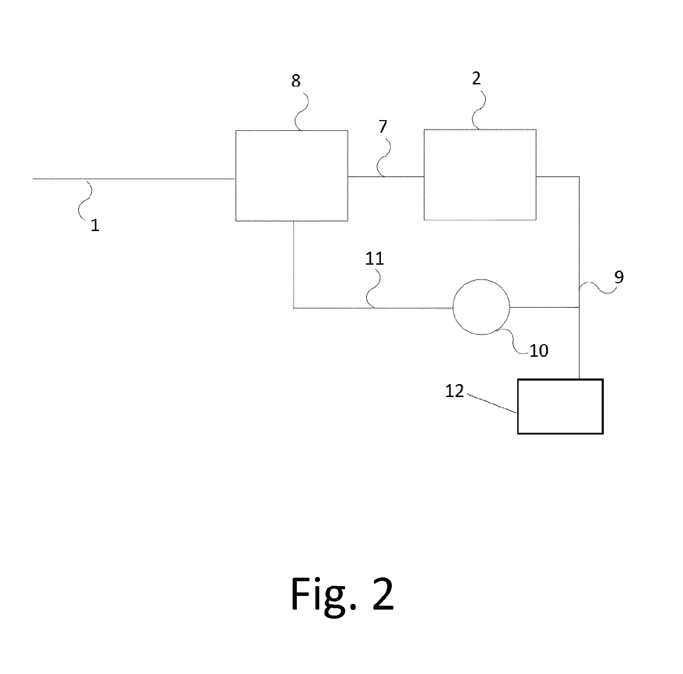

Fig. 2 illustrates the above embodiment of the present invention. The hydraulic pump motor 2, is fed with an AC supply 7, from an electronic inverter 8, which is powered from the fixed frequency AC power supply 1. The frequency of the AC power supply 7, and thus the motor speed of pump 2, is conditioned to a set target for a specified input. The hydraulic output 9 acts as a hydraulic power source for directional control valve (DCV) 12, which performs well control functions in an underwater hydrocarbon extraction facility.

The pressure of hydraulic output 8 is measured by a pressure sensor 10 (e.g. a pressure transducer), with typically a 4-20 mA electrical output 11, which controls the frequency of the AC output supply 7 from the inverter 8, and thus the speed of the pump motor 2. The inverter 8 incorporates electronic control circuitry allowing the speed of the motor 2 to be set according to the sensed hydraulic pressure so that the speed of pump motor 2 is reduced as the system pressure approaches the required target system pressure and typically the output frequency of inverter 8 will reduce to zero at the target pressure. At pressures below the target pressure, the control circuitry allows for setting of some hysteresis to provide a measured increase in motor speed from zero to maximum, avoiding damage to the motor winding and control through cold start under load to maximum speed at the start point. Thus, this embodiment allows the typical occasional demand on the subsea hydraulic system to be satisfied without significant deviation in hydraulic pressure providing greater margin between minimum system pressure and DCV de-latch pressure.

### ADVANTAGES OF USING THE INVENTION

The present invention may remove the risk of unwanted de-latching of DCVs by guaranteeing a greater margin between the field pressure at any time and the de-latch pressure of the control valves, thus allowing some projects to be executed when it might otherwise be considered unworkable.

The present invention may allow well equipment suppliers to engineer a DCV standard that satisfies field requirements.

The present invention may allow the switching of redundant pumps by duty switching the variable speed drive rather that switching the main current thus also protecting their motor windings, and reducing transients.

The present invention may remove the need to define high and low pressure pump operating points.

The present invention may remove the risk of damage to hydraulic pump motor windings.

The present invention may substantially increase the reliability of the hydraulic system pressure control, thus providing greater confidence to the well operator.

The invention is not limited to the specific embodiments disclosed above, and other possibilities will be apparent to those skilled in the art.

Various aspects and embodiments of the present invention are defined by the following numbered clauses:
1. A hydraulic fluid pressure control system comprising:
   a hydraulic pump motor having an electrical input configured to receive an AC input signal and a hydraulic fluid output configured to output a pressure proportional to the frequency of the AC input signal; and
   electronic control circuitry connected to said electrical input, wherein:
      said electronic control circuitry provides an AC input signal of variable frequency.
2. A hydraulic fluid pressure control system according to clause 1, further comprising a pressure sensor connected to the hydraulic fluid output.
3. A hydraulic fluid pressure control system according to clause 1 or clause 2, wherein the pressure sensor produces an electrical output responsive to the sensed pressure of the hydraulic fluid output.
4. A hydraulic fluid pressure control system according to any preceding clause, wherein the electronic control circuitry provides an AC input signal based on the electrical output.
5. A hydraulic fluid pressure control system according to any preceding clause, wherein the electronic control circuitry comprises an electronic inverter.
6. A hydraulic fluid pressure control system according to any preceding clause, wherein the electronic control circuitry provides an AC input signal corresponding to a target pressure of the hydraulic fluid output.
7. A hydraulic fluid pressure control system according to any preceding clause, wherein the electronic control circuitry limits the rate of change of the AC input signal frequency.
8. A hydraulic fluid pressure control system according to any preceding clause, wherein the pump motor acts as a power source for a directional control valve.
9. A hydraulic fluid pressure control system according to any preceding clause, wherein the hydraulic pump motor acts as a hydraulic power source for well control in an underwater hydrocarbon extraction facility.
10. A method for controlling the speed of a hydraulic pump motor, said hydraulic pump motor having an electrical input configured to receive an AC input signal and a hydraulic fluid output configured to output a pressure proportional to the frequency of the AC input signal, said method comprising:
   providing an AC input signal of variable frequency to the electrical input using electronic control circuitry.
11. A method according to any preceding clause, further comprising the step of providing a pressure sensor connected to the hydraulic fluid output.
12. A method according to any preceding clause, further comprising the steps of sensing the pressure of the hydraulic fluid output using the pressure sensor, and producing an electrical output responsive to the sensed pressure of the hydraulic fluid output.
13. A method according to any preceding clause, wherein the electronic control circuitry provides an AC input signal based on the electrical output.
14. A method according to any preceding clause, wherein the electronic control circuitry comprises an electronic inverter.
15. A method according to any preceding clause, wherein the electronic control circuitry provides an AC input signal corresponding to a target pressure of the hydraulic fluid output.
16. A method according to any preceding clause, wherein the electronic control circuitry limits the rate of change of the AC input signal frequency.
17. A method according to any preceding clause, wherein the pump motor acts as a power source for a directional control valve.
18. A method according to any preceding clause, wherein the hydraulic pump motor acts as a hydraulic power source for well control in an underwater hydrocarbon extraction facility.
19. A hydraulic fluid pressure control system substantially as hereinbefore described with reference to Fig. 2.
20. A method substantially as hereinbefore described with reference to Fig. 2.

## Claims

1. A hydraulic fluid pressure control system comprising:
a hydraulic pump motor having an electrical input configured to receive an AC input signal and a hydraulic fluid output configured to output a pressure proportional to the frequency of the AC input signal; and
electronic control circuitry connected to said electrical input, wherein:
said electronic control circuitry provides an AC input signal of variable frequency.

2. A hydraulic fluid pressure control system according to claim 1, further comprising a pressure sensor connected to the hydraulic fluid output.

3. A hydraulic fluid pressure control system according to claim 2, wherein the pressure sensor produces an electrical output responsive to the sensed pressure of the hydraulic fluid output.

4. A hydraulic fluid pressure control system according to claim 3, wherein the electronic control circuitry provides an AC input signal based on the electrical output.

5. A hydraulic fluid pressure control system according to any preceding claim, wherein the electronic control circuitry comprises an electronic inverter.

6. A hydraulic fluid pressure control system according to any preceding claim, wherein the electronic control circuitry provides an AC input signal corresponding to a target pressure of the hydraulic fluid output.

7. A hydraulic fluid pressure control system according to any preceding claim, wherein the electronic control circuitry limits the rate of change of the AC input signal frequency.

8. A hydraulic fluid pressure control system according to any preceding claim, wherein the pump motor acts as a power source for a directional control valve.

9. A hydraulic fluid pressure control system according to any preceding claim, wherein the hydraulic pump motor acts as a hydraulic power source for well control in an underwater hydrocarbon extraction facility.

10. A method for controlling the speed of a hydraulic pump motor, said hydraulic pump motor having an electrical input configured to receive an AC input signal and a hydraulic fluid output configured to output a pressure proportional to the frequency of the AC input signal, said method comprising:
providing an AC input signal of variable frequency to the electrical input using electronic control circuitry.

11. A method according to claim 10, further comprising the step of providing a pressure sensor connected to the hydraulic fluid output.

12. A method according to claim 11, further comprising the steps of sensing the pressure of the hydraulic fluid output using the pressure sensor, and producing an electrical output responsive to the sensed pressure of the hydraulic fluid output.

13. A method according to claim 12, wherein the electronic control circuitry provides an AC input signal based on the electrical output.

14. A method according to any of claims 10 to 13, wherein the electronic control circuitry comprises an electronic inverter.

15. A method according to any of claims 10 to 14, wherein the electronic control circuitry provides an AC input signal corresponding to a target pressure of the hydraulic fluid output.
